(19) Europäisches Patentamt / European Patent Office / Office européen des brevets

(11) **EP 4 095 762 A1**

(12) **EUROPEAN PATENT APPLICATION**

(43) Date of publication:
**30.11.2022 Bulletin 2022/48**

(21) Application number: **22174072.3**

(22) Date of filing: **18.05.2022**

(51) International Patent Classification (IPC):
**G06N 3/08** *(2006.01)*　　　**G06N 3/04** *(2006.01)*
**G06N 3/063** *(2006.01)*

(52) Cooperative Patent Classification (CPC):
**G06N 3/0454; G06N 3/082;** G06N 3/0481;
G06N 3/063

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2021 US 202163191294 P**
　　　　　**28.05.2021 US 202163194927 P**
　　　　　**18.01.2022 US 202217578435**

(71) Applicants:
• **Samsung Electronics Co., Ltd.**
　**Gyeonggi-do, 16677 (KR)**
• **The Regents of the University of California**
　**Oakland, CA 94607-5200 (US)**

(72) Inventors:
• **THORSLEY, David Philip Lloyd**
　**San Jose, CA 95134 (US)**
• **KIM, Se Hoon**
　**San Jose, CA 95134 (US)**
• **SHEN, Sheng**
　**San Jose, CA 95134 (US)**
• **GHOLAMINEJAD, Amir**
　**San Jose, CA 95134 (US)**
• **HASSOUN, Joseph**
　**San Jose, CA 95134 (US)**
• **KWON, Woosuk**
　**San Jose, CA 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **LEARNED THRESHOLD TOKEN PRUNING FOR TRANSFORMER NEURAL NETWORKS**

(57)　An architecture and method are disclosed to reduce computation in a self-attention model. The self-attention model is trained using multiple sub-models; each sub-model receiving an input sequence of tokens; each input sequence of tokens being scored within each sub-model to provide a token score for each sub-model; each sub-model having a predetermined threshold score. Each sub-model prunes tokens from the input sequence with a score below the predetermined threshold score for the sub-model. The pruned sequences of each sub-model are used as the input sequences for the next sub-model. The predetermined threshold scores for each sub-model differing.

FIG. 4

EP 4 095 762 A1

**Description**

TECHNICAL FIELD

The subject matter disclosed herein relates to neural networks. More particularly, the subject matter disclosed herein relates to a system and a method for reducing computation associated with a transformer deep-learning neural network.

BACKGROUND

Transformer deep-learning models are considered to be state-of-the-art processing techniques for many natural-language processing tasks. Multi-head self-attention is a core feature of many of the transformer deep-learning models.

SUMMARY

The invention is defined by the appended claims. An example embodiment provides a method and device to reduce computation in a self-attention model. The self-attention model may be trained using input sequences. Exemplarily, the self-attention model may be computer-implemented. The self-attention model may include at least a first sub-model and a second sub-model. The input sequences may include first input sequence with a plurality of tokens. The plurality of tokens may be received into the first sub-model, where each of the plurality of tokens are scored for a first token score. At least one of the plurality of tokens below a first predetermined threshold score may be pruned from the first input sequence to form a second input sequence. The second input sequence may be input into the second sub-model, where each token of the second input sequence is scored for second token score. At least one of the tokens below a second predetermined threshold score may be pruned from the second input sequence to form a third input sequence. The second predetermined threshold score may differ from the first predetermined threshold score. The second predetermined threshold score may be equal to or greater than the first predetermined threshold score. The difference between the second predetermined threshold score and the first predetermined threshold score may be proportional to a predetermined maximum token score. The difference between the second predetermined threshold score and the first predetermined threshold score may be inversely proportional to a length of the first input sequence. The difference between the second predetermined threshold score and the first predetermined threshold score may be inversely proportional to a length of the second input sequence. The third input sequence may be transmitted to a third sub-model of the self-attention model. Each token of the third input sequence may be scored for a third token score. At least one token from the tokens of the third input sequence may be pruned for having a third token score less than a third predetermined threshold score to form a fourth input sequence. The third predetermined threshold score may differ from the second predetermined threshold score. The difference between the third predetermined threshold score and the second predetermined threshold score may equal the difference between the second predetermined threshold score and the first predetermined threshold score.

An example embodiment provides a transformer deep-learning model. Exemplarily, the transformer deep-learning model may be computer-implemented. The transformer deep-learning model may have an encoder model. The encoder model may have multiple layers. Each layer of the encoder model may have a multi-head attention sublayer. The multi-head attention sublayer may process an encoder query feature map Q, an encoder key feature map $K$, and an encoder value feature map $V$ for an encoder input sequence comprising a plurality of tokens $X$. At least one encoder layer may score the plurality of tokens $X$ using a scaled dot-product of the query feature map $Q$ and the encoder feature map $K$. At least one encoder layer may determine an encoder threshold score M. At least one encoder layer may prune encoder tokens of the plurality of encoder tokens with a score less than the encoder threshold score M to form a pruned encoder sequence. The encoder input sequence layer for a second encoder layer may be the pruned encoder sequence for a first encoder layer. The encoder threshold score $M$ may increase between the first encoder layer and the second encoder layer. The encoder threshold score $M$ may increase linearly between each encoder layer. The encoder threshold score $M$ may increase proportional to a predetermined maximum encoder threshold score. The encoder threshold score $M$ may increase inversely proportional to a length of the encoder input sequence. The encoder threshold score $M$ may increase proportional a length of the pruned encoder sequence. The encoder threshold score $M$ may increase proportional to a layer index of each encoder layer. The encoder threshold score $M$ may increase linearly between each encoder layer.

An example embodiment provides a method to reduce computation in a self-attention model. Exemplarily, the method may be computer-implemented. A self-attention model may include a plurality of sub-models. The self-attention model may be trained by receiving an input sequence. The input sequence may include a first plurality of tokens in a first sub-model of the plurality of sub-models. The first plurality of tokens may be scored in the first sub-model. Tokens of the first plurality of tokens with a score less than a first predetermined threshold score may be pruned from the first plurality of tokens to form a second plurality of tokens. A second sub-model may receive the second plurality of tokens and may score the second plurality of tokens. Tokens of the second plurality of tokens with a score less than a second predetermined threshold score may be pruned from the second plurality of tokens to form a third plurality of tokens. The second predetermined threshold score may be equal to or greater than the first predetermined threshold score. The difference between the second predetermined threshold score and the first predetermined threshold score may be proportional to a predetermined maximum token score. The difference between the second predetermined threshold score and the first predetermined threshold score may be inversely proportional to a number of tokens in the second plurality of tokens. The difference between the second predetermined threshold score and the first predetermined threshold score may be inversely proportional to a number of tokens in the first plurality of tokens. The third plurality of tokens may be scored by a third sub-model. Tokens of the third plurality of tokens with a score less than a third predetermined token threshold score may be pruned to form a fourth plurality of tokens. The third predetermined token threshold score may differ from the second predetermined token threshold score. The difference between the third predetermined token threshold score and the second predetermined token threshold score may equal the difference between the second predetermined token threshold score and the first predetermined token threshold score.

## BRIEF DESCRIPTION OF THE DRAWING

In the following section, the aspects of the subject matter disclosed herein will be described with reference to exemplary embodiments illustrated in the figures, in which:

FIG. 1A depicts a functional block diagram of an example embodiment of a transformer deep-learning model;
FIG. 1B depicts a block diagram of an example embodiment of a multi-head attention layer of the example transformer deep-learning model;
FIG. 1C depicts details of a scaled dot-product attention layer of the example transformer deep-learning model;
FIG. 2 depicts an example sequence for threshold-pruning for reducing computation involved during deep neural network training according to the subject matter disclosed herein;
FIG. 3 depicts a block diagram of an example embodiment of threshold token pruning;
FIG. 4 depicts a block diagram of an example embodiment of a strategy for pruning threshold tokens;
FIG. 5 depicts results of series of example tests runs demonstrating computerized efficiency according to the subject matter disclosed herein; and
FIG. 6 depicts a block diagram of an example embodiment of a system according to the subject matter disclosed herein.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth. The modules may also be referred to as models, and sub-models.

Transformer deep-learning models utilize a self-attention mechanism, differentially weighing the significance of each part of the input data. A self-attention mechanism provides context for any position in the input sequence, allowing for parallelization during training of a deep neural network. Self-attention mechanisms receive input sequences that are converted into tokens. Each token is provided a probability and scored based on a relevant metric (also known as the attention-probability and as the attention-score or importance-score). For example, in natural-language processing, a sentence may be processed with each word and/or portions of each word provided with a corresponding token, and each token provided a probability and score to a metric, such as verb identification. Multi-headed self-attention mechanisms parallelize the self-attention mechanism by allowing multiple different attention heads attend to the tokens, each attention head determining the scoring and probability of the tokens with respect to different metrics. For example, one attention head may measure relevance of the tokens with respect to matching a verb and object, while another attention head may measure relevance of the next token. In a multi-headed self-attention mechanism, each of the attention heads may be performed in parallel, and each attention head may process the input sequence tokens in parallel. Such self-attention mechanisms may include models made using Bidirectional Encoder Representations from Transformers (BERT).

A self-attention mechanism scales quadratically with respect to the length of an input sequence (i.e., the length of the input sentence). Accordingly, longer sequences involve more computation. The subject matter disclosed herein reduces the computation involved during deep neural network training by providing a threshold-based token-pruning method that reduces redundant tokens as the data passes through different blocks of a transformer deep-learning model, such as by using a comparison logic. Tokens within a given sequence may have different levels of relevance depending on the task being performed. Such a token pruning method, as disclosed herein, allows for pruning to performed to remove tokens that are irrelevant to a task prior to performing the corresponding calculation. For example, NLP tasks may include sentence classification, sentiment analysis, recognizing entailment, or question answering. However, an input sequence being evaluated may have only a small portion of the overall length of the input sequence relevant towards each task. In an example of an NLP task, in determining a sentiment analysis of an example sentence of "this movie is very bad", the only relevant words are "movie" and "bad". Thus, pruning the example sentence for sentiment analysis would remove tokens corresponding to "the" "is" and "very", reducing the tokens to process from 5 to 2, removing 60% of the tokens of this example. As such, pruning may increase the computational efficiency of deep neural networks.

As disclosed herein, a method of reducing computation during deep-neural-network training and inference may include: training a deep-neural-network that prunes tokens with low token importance scores from input sentences; during training, tokens having an importance score that is less than a threshold token importance score may be removed and not used for further training; and a using a threshold that increases over time. In one embodiment, the threshold token importance score may linearly increase with a constant slope though each self-attention module in the transformer. In another embodiment, the threshold token importance score may be a linearly increasing percentage of a maximum token importance score for the module. In still another embodiment, the threshold token importance score may increase by adding a regularization term to a loss function during training to find a threshold function for the threshold token importance score that optimally balances maintaining accuracy and decreasing computation time. In some embodiments, the threshold function may be linear with a slope defined by training. In further embodiments, a combination of techniques may be used.

Furthermore, a Learnable Threshold Token Pruning (LTTP) strategy disclosed herein allows threshold pruning to be fully automated by learning a binarized mask. In some embodiments, a differentiable soft binarized mask may be used to learn the optimal threshold for different transformer blocks and adapted for different tasks. In other embodiments, a hard mask may be used with or without binarization. In further embodiments, a differentiable soft binarized mask may be used to train a threshold function for different transformer blocks, and create a hard binarized mask upon completion of training.

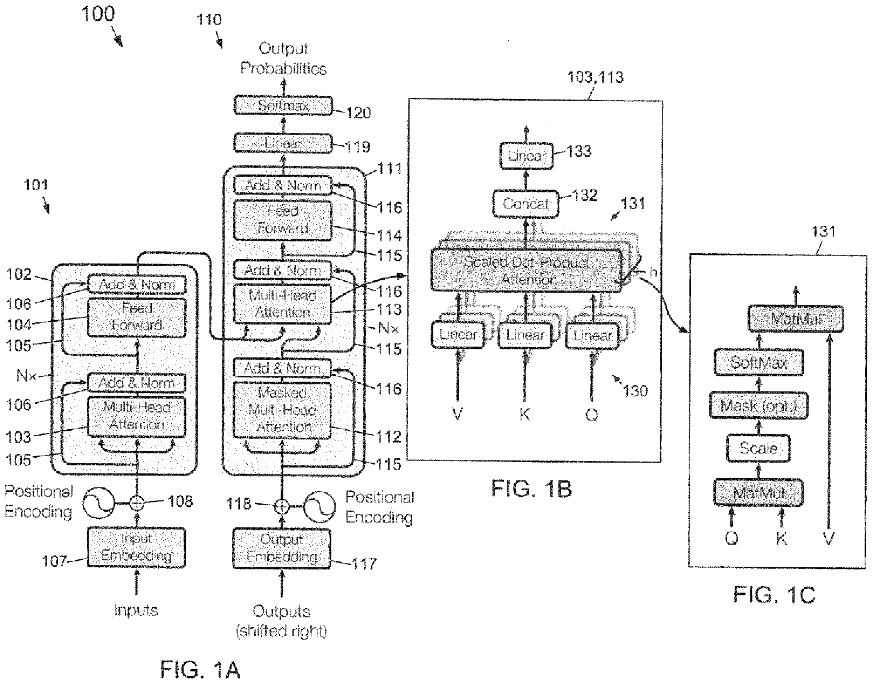

FIG. 1A depicts a functional block diagram of an example embodiment of a transformer deep-learning model 100. The transformer deep-learning model 100 may include an encoder 101 and a decoder 110. The encoder 101 and/or the decoder 110 may be embodied as one or more modules comprising a series of sub-models. The encoder 101 may include N layers 102 in which N is an integer. Each layer 102 may be referred to a sub-model, and may include a multi-head attention sublayer 103 and a feed-forward sublayer 104. A residual connection 105 may be used around each multi-head attention sublayer 103 and feed-forward sublayer 104, followed by a layer normalization 106. Inputs to the encoder 101 (e.g., target sentences) may be embedded at 107 into an $n$-dimensional space. Positional encoding 108 may be added to the embedded representation of the inputs.

Similar to the encoder 101, the decoder 110 may include N layers 111. Each layer 111 may be referred to a sub-model and may include a masked multi-head attention sublayer 112, a multi-head attention sublayer 113, and a feed-forward sublayer 114. A residual connection 115 may be used around each multi-head attention sublayer 113 and feed-forward sublayer 114, followed by a layer normalization 116. The masked multi-head attention sublayer 112 prevents positions from attending to subsequent positions. Outputs of the decoder 110 may be embedded at 117 and positionally offset at 118 by one position so that predictions for a position $i$ may depend only on the known outputs at positions less that $i$.

Outputs of the decoder 110 may be input to a linear classifier layer 119 and then to a Softmax layer 120, which outputs probabilities that may be used to predict a next token in an output sequence.

The multi-head self-attention model of the transformer deep-learning model 100 may include several matrix multiplication operations that use no static weights. FIG. 1B depicts a block diagram of an example embodiment of a multi-head attention sublayer 103 for the encoder 101, and a multi-head attention sublayer 113 for the decoder 110. As depicted in FIG. 1B, a multi-head attention layer may include $h$ linear projections 130 of matrices $V, K$ and $Q, h$ scaled dot-product attention layers 131 in which $h$ is an integer, a concatenation layer 132 and a linear classifier layer 133.

A multi-head attention sublayer 103 for the encoder 101, and a multi-head attention sublayer 113 for the decoder 110 may be parallelized with linear projections of $V, K$ and $Q$. $V$ may be a matrix (i.e., a feature map) of the values that are again the vector representations of all the words in the sequence, $K$ may be a matrix (i.e., a feature map) of all the keys (vector representations of all the words in the sequence), and $Q$ may be a matrix (i.e., a feature map) that contains a query (vector representation of one word in the sequence). The parallelization allows the transformer deep-learning model 100 to beneficially learn from different representations of $V, K$ and $Q$. The linear representations are formed by multiplying $V, K$ and $Q$ by weight matrices $W$ that are learned during the training. The matrices $V, K$ and $Q$ may be different for each position of the attention modules in the structure depending on whether the matrices $V, K$ and $Q$ are in the encoder 101, the decoder 110, or in-between the encoder 101 and decoder 110 so that either the whole or a part of encoder input sequence may be attended. A multi-head attention module that connects the encoder 101 and the decoder 110 takes an encoder input sequence into account together with a decoder input-sequence up to a given position.

After the multi-head attention sublayer 103 for the encoder 101, and the multi-head attention sublayer 113 for the decoder 110, a pointwise feed-forward sublayer 104 for the encoder 101, a pointwise feed-forward sublayer 114 for the decoder 110 may be included after multi-head attention sublayers 103, multi-head attention sublayer 113 in both the encoder 101 and the decoder 110. Each feed-forward sublayer 104 for the encoder 101, and feed-forward sublayer 114 for the decoder 110 may include identical parameters for each position that may provide a separate, identical linear transformation for each element from the given sequence.

FIG. 1C depicts details of a scaled dot-product attention layer 131. The inputs to a scaled dot-product attention layer 131 may include queries, keys of dimension $d_k$, and values of dimension $d_v$. Dot products of the query with all keys are computed and each dot product is divided by $\sqrt{d_k}$. A softmax function may then be applied to obtain the scores, or probabilities, for the values. The attention function is computed on a set of queries simultaneously, and combined into a matrix $Q$. The keys and values are also respectively combined together into matrices $K$ and $V$. A matrix of outputs is computed as:

$$Attention\ (Q, K, V) = softmax\left(\frac{QK^T}{\sqrt{d_k}}\right)V, \qquad (1)$$

in which $K^T$ is the transpose of matrix $K$.

Alternatively, Eq. (1) may be rewritten more generally as:

$$Attention\ (x) = \sum_{i=1}^{n} softmax\left(\frac{x^T Q K^T x_i}{\sqrt{d}}\right)V x_i, \qquad (2)$$

in which the multi-head attention, MHA, for a token x may be represented for Nh heads as:

$$MHA(x) = \sum_{h=1}^{N_h} Attention\ _h(x). \qquad (3)$$

Each token for a MHA, $x_{MHA}$, may be expressed as:

$$x_{MHA} = \text{LN}(Attention\ (x) + x), \qquad (4)$$

in which LN is the layer norm the output for layer *l* of $x_{out}^{(l)}$ with a feed-forward block FFN may be expressed as:

$$x_{out}^{(l)} = \text{LN}(\text{FFN}\left(x_{MHA}^{(l)}\right) + x_{MHA}^{(l)}). \qquad (5)$$

Additionally, the cost of computational complexity for computing the attention matrix is $O(4d_k^2 n + n^2 d_k)$, which quadratically scales with sequence length. As such, the attention operation tends to become a bottleneck when applied to large sentences. One method to address a potential bottleneck may be to apply token pruning that removes unimportant tokens as the input passes through the transformer layers, thereby reducing the sequence length n for later blocks.

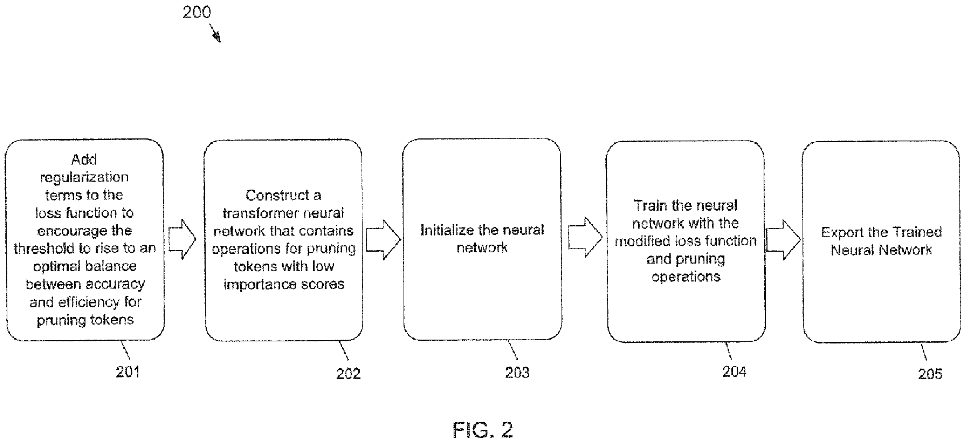

FIG. 2 depicts an example embodiment of a sequence 200 for reducing the computation involved during deep neural network training using an example threshold-pruning approach according to the subject matter disclosed herein. At 201, regularization terms may be added to a loss function, forming an augmented loss function for pruning tokens. In some embodiments, the loss function may be augmented to encourage a threshold to increase to be as large as reasonable, for example, to prune as aggressively as possible while still minimizing a standardized objective. That is, finding a loss function that optimally balances maintaining accuracy and decreases computation time. In other embodiments, the loss function may use a decreasing threshold either alone or in combination with an increasing function.

At 202, a transformer neural network may be constructed containing operations for pruning tokens having low importance scores as determined by the augmented loss function. At 203, a neural network is initialized, and at 204, the neural network may be trained with the augmented loss function and the pruning operations from the transformer neural network. At 205, the trained neural network may be exported.

The attention probability between tokens $x_i$ and $x_j$ may be expressed in terms of an attention probability of head *h* between the tokens $x_i$ and $x_j$ in a layer *l*.

$$A^{(h,l)}\left(x_i, x_j\right) = softmax\left(\frac{x^T Q K^T x}{\sqrt{d}}\right)_{(i,j)}. \qquad (6)$$

For token pruning, a metric may be defined to determine which tokens are unimportant tokens. One approach for doing this is to compute an importance score s for each token $x_i$ in layer $l$:

$$s^l(x_i) = \frac{1}{N_h}\frac{1}{n}\sum_{h=1}^{N_h}\sum_{j=1}^{n} A^{(h,l)}\left(x_i, x_j\right). \qquad (7)$$

Intuitively, the attention probability may be interpreted as the normalized amount that all the other tokens $x_j$ attend to token $x_i$. Therefore, a token $x_i$ may be considered important if the token $x_i$ receives more attention from all tokens across all heads, as in Eq. (7). The importance score for a token may alternatively be known as the token importance score, and the threshold token importance score may be thus referred to as the threshold.

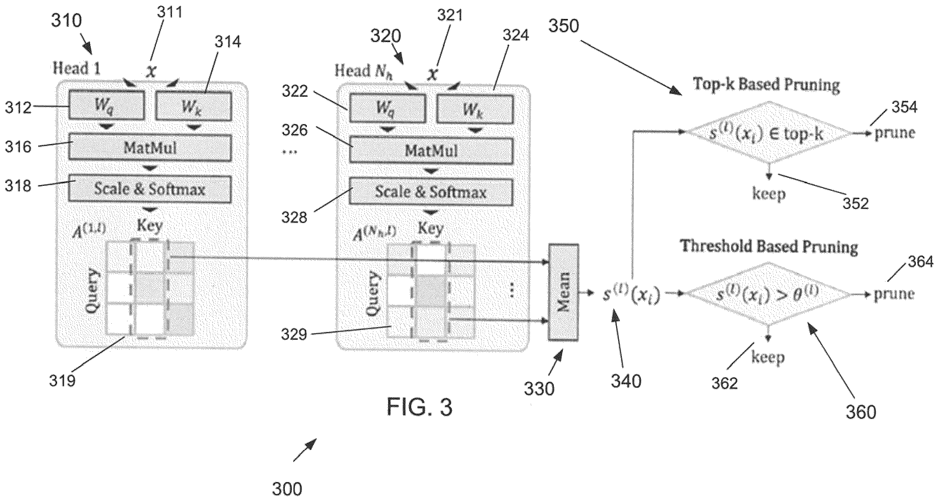

FIG. 3 provides an example embodiment of a schematic 300 of a threshold token pruning operation 360 in comparison to a top-k token pruning 350 according to the subject matter disclosed herein. Each head has the attention probabilities determined using the process described with respect to FIG. 1C with the scaled dot-product attention layers 131. An input sequence 311 of x may be entered into a first head 310. A query work function 312 of $W_q$ and a key work function 314 of $W_k$ may be determined for the input sequence 311. The query work function 312 of $W_q$ and the key work function 314 of $W_k$ have a dot product 316 calculated and then a normalized value 318 may be found by scaling the results prior to applying Softmax to determine the attention probability of the first head 310. The process may be repeated over each of h heads. The token importance score $s^{(l)}$ 340 may be calculated from the mean 330 of the attention probability over all the heads.

In pruning based on the top-k at 350, a token may be kept at 352 if the importance score of the token is one of the k greatest values in the layer and may be pruned at 354 otherwise. Alternatively, using a threshold token pruning operation 360, a token may be kept at 362 if the importance score of the token exceeds an absolute threshold value, and may be pruned at 364 otherwise.

In threshold token pruning, a threshold-based token pruning approach prunes tokens if the token has a token importance score less than a threshold denoted by $\theta^{(l)} \in \mathbb{R}$. Specifically, a pruning strategy may be defined by imposing a binary mask $M^{(l)}(\cdot):\{1, \ldots, n\} \rightarrow \{0,1\}$ that indicates whether a token should be kept or pruned:

$$M^{(l)}(x_i) = \begin{cases} 1 & \text{if } s^{(l)}(x_i) > \theta^{(l)}, \\ 0 & \text{otherwise.} \end{cases} \qquad (8)$$

In other words, a token may be pruned if the token has a token importance score greater than a predetermined threshold, and evaluating the token for pruning may be done with a simple comparison operator without a top-$k$ calculation. Furthermore, in some embodiments, once a token is pruned, a pruned token may be excluded from calculations in all succeeding layers, thereby gradually reducing the computation complexity in bottom layers (i.e., cascade token pruning). In other embodiments, tokens may be pruned if they have an importance score equal to or less than the predetermined threshold.

In some embodiments, tokens may be ranked according to their importance scores and may be pruned based on a selection strategy. For example, in a top-k method, a token $x_i$ may be pruned at layer $l$ if token $x_i$ has the importance score $s^{(l)}(x_i)$ smaller than a k-largest values of the importance score from all the tokens. However, finding the k-largest values of the importance score may be computationally inefficient and may be expensive without specialized hardware.

As such, in some embodiments, the regularization terms may vary a token threshold by finding a token$_{id}$ $t_{max}$ having a largest token importance score $s_{max}$. A threshold $m$ may be selected such that tokens may be kept if the token has a token importance score, for example, greater than a threshold token importance score of $ms_{max}$. In other embodiments, the tokens may be pruned if the token has a token importance score equal to or less than the threshold $m$. In still other embodiments, the threshold may vary. For example, an increasing threshold may be used that increases threshold $m$ according to a linear function. Alternatively, the threshold may be a falling threshold or decreasing threshold such that the threshold decreases according to a linear function.

Furthermore, tokens may be pruned differently depending on the sequence being input. For example, in one embodiment, the threshold may be adjusted based on an initial sequence with a length $L_o$. In another embodiment, the threshold $m$ may be replaced with a threshold of $\dfrac{m'}{L_o}$ so that the threshold may be smaller for longer initial sequences and higher for smaller initial sequences. In some embodiments the threshold may be adjusted based on a pruned sequence length $L$, in which the pruned sequence length $L$ is the current length of the sequence, which may be lower than initial sequence $L_o$ due to pruning from prior modules. In such an embodiment, the threshold $m$ may be replaced with $\dfrac{m'}{L}$ so the threshold is smaller for longer sequences in initial modules, and becomes larger for shorter sequences in later modules. As such, in some embodiments, the threshold may be inversely proportional to the initial sequence length, and/or the pruned sequence length. Furthermore, in other embodiments the threshold may be both proportional to a maximum threshold importance score of $s_{max}$, and inversely proportional to the initial sequence length and/or the pruned sequence. That is, in some embodiments the threshold $m$ may be replaced with either/or $\dfrac{m'}{L} s_{max}$ or $\dfrac{m'}{L_o} s_{max}$.

In some embodiments, for a given threshold of $\theta^{(L_f)}$ of a final layer $L_f$, the threshold for a layer $l$ may be set as $\theta^{(L_f)} l / L_f$. That is, the threshold may be proportional to the relative position of a layer $l$ with respect to the total number of layers $L_f$. In some embodiments, the given threshold $\theta^{(L_f)}$ of a final layer $L_f$ may equal the $m s_{max}$. In such an embodiment, the threshold would rise linearly on a slope of $\theta^{(L_f)} / L_f$.

In some embodiments, the threshold may be adjusted based on a module number. For example, a top-k value may be adjusted based on the threshold, such that $m$ is increased as progress is made through the network and attention scores may be used instead of attention probabilities for thresholding.

In some embodiments, the threshold values may be individually determined for each layer. Not only may the threshold values change between layers, the threshold values also may vary for different tasks. This may be addressed by making a masking function (i.e., $M$ in Eq. (8)) learnable. Due to the binary nature of $M$ there may be no gradient flow for the pruned tokens. Additionally, a $M$ operator that is non-differentiable may prevent gradient flows into thresholds. Furthermore, a Straight-Through Estimator (STE) may not be applied to estimate the gradients with respect to the threshold.

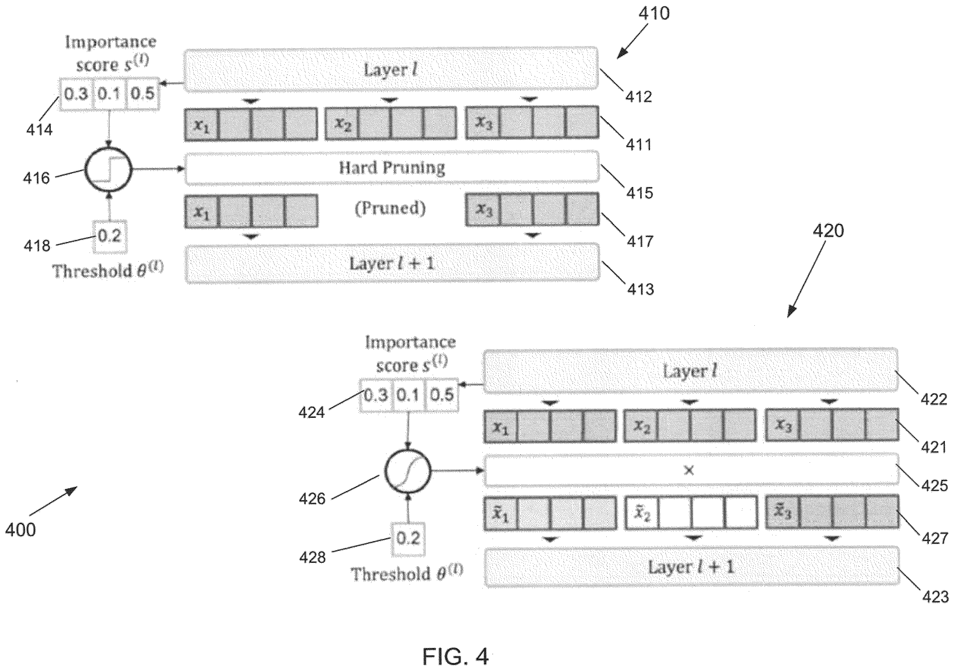

As such, in some embodiments, a soft pruning scheme may be used that simulates the original hard pruning while still propagating gradients to the thresholds. FIG. 4 provides example embodiments of different pruning strategies 400 for threshold-based token pruning methods. In particular, FIG. 4 provides an example of a hard-pruning scheme 410 using a binary hard mask 416 to select tokens to be pruned. A input layer 412 of $l$ includes an input sequence 411 of tokens $x_1, x_2, \ldots x_N$. The importance score 414 of the tokens $x_1, x_2, \ldots x_N$ of the input sequence 411 may be determined according to Eq. (7). The learnable hard threshold token value 418 of $\theta^{(l)}$ and the importance score 414 of the tokens $x_1, x_2, \ldots x_N$ of the input sequence 411 are then compared using the binary hard mask 416 in the hard-pruning sublayer 415 to prune the tokens of input sequence 411 in which the importance score of the token is less than the learnable hard threshold token value 418 of $\theta^{(l)}$. In the example of FIG. 4, token $x_2$ is pruned by the hard-pruning sublayer 415, removing the token from the output sequence of tokens 417 within a subsequent layer 413 of $l+1$.

In the hard-pruning scheme 410, once a token is removed within a layer 412 of $l$ by the hard-pruning sublayer 415, the removed token is no longer present within the subsequent layer 413 of $l+1$. Furthermore, in the hard-pruning scheme 410, the binary hard mask 416 is a step function, and may not be differentiated, preventing back propagation of the gradients. In contrast, FIG. 4 also provides an example embodiment of a soft-pruning scheme 420 that replaces the binary hard mask 416 with a differentiable soft mask 426 that simulates the binary hard mask 416 while still propagating gradients to the thresholds 428.

Soft Pruning Scheme. In a soft pruning scheme, the non-differentiable masking $M^{(l)}$ may be replaced with a differentiable soft sigmoid operation. For example:

$$\widetilde{M}^{(l)}(x_i) = \sigma\left(\frac{s^{(l)}(x_i) - \theta^{(l)}}{T}\right) = \frac{1}{1 + \exp(s^{(l)}(x_i) - \theta^{(l)})/T}, \qquad (9)$$

in which T is a temperature parameter, and $\theta^{(l)}$ is a learnable threshold value 428 for a layer 422 of $l$. With a sufficiently large temperature value T, $\widetilde{M}^{(l)}(x_i)$ closely approximates the hard masking $M^{(l)}(x_i)$ in Eq. (8) applied as the binary hard mask 416. Furthermore, instead of selecting tokens to be pruned or kept based on the hard mask of Eq. (8), the output $x_{out}^{(l)}$ of layer $l$ may be multiplied to the output activation of layer $l$. Thus, solving for Eq. (9) in terms of Eq. (5) results in:

$$\tilde{x}_{out}^{(l)} = \tilde{M}^{(l)}\left(x^{(l)}\right) \cdot x_{out}^{(l)} = \tilde{M}^{(l)}\left(x^{(l)}\right) \cdot LN\left(FFN\left(x_{MHA}^{(l)}\right) + x_{MHA}^{(l)}\right), \qquad (10)$$

in which $x_{MHA}^{(l)}$ is the output activation token of the MHA in layer $l$.

In the soft-pruning scheme 420, the input layer 422 of $l$ includes an input sequence 421 of tokens $x_1$, $x_2$, ...$x_N$. The importance score 424 of the tokens $x_1$, $x_2$, ...$x_N$ of the input sequence 421 may be determined according to Eq. (7). The learnable soft threshold token value 428 of $\theta^{(l)}$ and the importance score 424 of the tokens $x_1$, $x_2$, ...$x_N$ of the input sequence 421 are then compared using the differentiable soft mask 426 of Eq. (9) in the soft-pruning sub layer 425 to prune the tokens of input sequence 421. In the example of FIG. 4, token $x_2$ is pruned by the soft-pruning sub layer 425, but token $x_2$ is not fully removed from the output sequence of tokens 427 within a subsequent layer 423 of $l+1$.

If the importance score of a token $x_i$ is less than a set threshold by a sufficient margin, the layer output activation of token $x_i$ becomes near zero and thus may have little impact on the succeeding layer. In addition, because the token may receive a zero-importance score in the succeeding layer, i.e. $s^{(l+1)}(x_i) = 0$, token $x_i$ becomes likely to be pruned again. Therefore, the behavior of the soft-pruning scheme 420 may be nearly identical to that of the hard-pruning scheme 410, yet the differentiable form of the soft-pruning scheme 420 allows the use of backpropagation and stochastic gradient descent (SGD) to make $\theta$ learnable.

After jointly training the model parameters and the thresholds on downstream tasks with a soft pruning scheme, the thresholds may be fixed, the soft mask may be binarized, and a follow-up fine-tuning of the model parameters may be performed. The pseudo-code for this three-step algorithm is given in Algorithm 1 below. Intuitively, the magnitude of gradient $d\tilde{M}^{(l)}(x_i)/d\theta^{(l)}$ may be maximized if the importance score $s^{(l)}(x_i)$ is close enough to the threshold $\theta^{(l)}$ and becomes near zero elsewhere. Therefore, the threshold may be trained based on the tokens that are about to be pruned or retained.

Algorithm 1: A Three-operation Training Procedure for Learnable Threshold Token Pruning. The input is a model $M$ finetuned on the target downstream tasks. In Operation 1, a soft mask is applied to $M$ and trains both the thresholds and the parameters of the model using a soft pruning. In Operation 2, the soft mask is binarized and has the thresholds fixed. In Operation 3, the model parameters may be fine-tuned using a hard pruning with the now fixed thresholds.

That is, the soft mask may have the thresholds determined during training using a first soft pruning. Afterwards, the soft mask has the thresholds fixed to the determined values and a second hard pruning is conducted to fine tune the model.

Regularization: In some embodiments, it may not be possible to learn $\theta$ to prune the network without regularization, as the optimizer may obtain a better loss value if all the tokens are present. As such, a regularization term may be added to penalize the network if many tokens are left unpruned. This can be achieved by imposing an L1 loss on the masking operator $\tilde{M}$:

$$\mathcal{L}_{new} = \mathcal{L} + \lambda \mathcal{L}_{reg} \text{ , where } \mathcal{L}_{reg} = \sum_{l=1}^{L}\left\|\tilde{M}^{(l)}(x)\right\|_1 \qquad (11)$$

Here, $\mathcal{L}$ is the original loss function (e.g., cross entropy loss), and $\lambda$ is the regularization parameter. Larger values of $\lambda$ may result in higher pruning ratios and vice versa. This regularization operator induces an additional gradient to the threshold:

$$\frac{d\mathcal{L}_{reg}}{d\theta^{(l)}} = \frac{1}{d\theta^{(l)}}\left\|\tilde{M}^{(l)}(x)\right\|_1 = \frac{1}{d\theta^{(l)}}\left(\sum_{i=1}^{n}\tilde{M}^{(l)}(x_i)\right) = \sum_{i=1}^{n}\frac{d\tilde{M}^{(l)}(x_i)}{d\theta^{(l)}} \qquad (12)$$

If there are more tokens near the threshold, then the gradient $\mathcal{L}_{reg}/d\theta^{(l)}$ may be larger. As a result, the threshold may be pushed to a larger value to prune more tokens from the threshold boundary. In some embodiments, the gradient may be set instead to decrease as the number of tokens near the threshold. In further embodiments, the gradient may be set to be constant.

Additionally, in various embodiments disclosed herein, input sentences may not require the number of tokens to be padded to a specify length. That is, sequence lengths in each layer may vary across different input sentences. In comparison, other methods such as the top-k method may pad the number of tokens in each input sentence to reach the nearest power of two. That is, in methods such as top-K token selection, the sequence lengths may be standardized with additional padding added to tokens with a length less than the standardized token length. As such, such methods as top-K token selection may be computationally inefficient in comparison to the various methods disclosed herein which are able to use comparison logic that poses token pruning as a binarized-quantization problem.

Evaluation

The methods herein are evaluated against the Robustly Optimized BERT Pretraining Approach or RoBERTa$_{base}$ and test on eight monolingual (English) General Language Understanding Evaluation (GLUE) benchmark tasks: sentence similarity (Quora Question Pairs or QQP 506, Microsoft Research Paraphrase Corpus or MRPC 516, Semantic Textual Similarity B or STS-B 514), sentiment classification (Stanford Sentiment Treebank 2 or SST-2 512), textual entailment (Recognizing Textual Entailment or RTE 518) and natural language inference (Matched Multi-Genre Natural Language Inference or MNLI-m 502 and Mismatched Multi-Genre Natural Language Inference or MNLI-mm 504, Question-answering Natural Language Inference or QNLI 508). For evaluating the results, classification accuracy and F1 score have been measured for MRPC 516 and QQP 506, Pearson Correlation and Spearman Correlation for STS-B 514, and classification accuracy for the remaining tasks on validation sets. For the tasks with multiple metrics (e.g. MRPC 516, QQP 506, STS-B 514), the average is reported.

Within the soft pruning stage, both the parameters of the model and the thresholds of the model are trained on downstream tasks for 1 to 10 epochs, depending on the dataset size. The temperature T was fixed as 1000 and the $\lambda$ was varied from 0.001 to 0.2 to control the number of tokens to be pruned (and thus the FLOPs) for all experiments. Then for the hard-pruning stage, the thresholds were fixed and an additional 10 epochs of training was performed with hard pruning to fine-tune the model parameters only. The top-K token pruning was also compared with the first three layers retaining all tokens while the remaining layers are assigned with linearly decaying token retain ratio until reaching the final token retain ratio at the last layer. The final token retain ratio was varied from 1.0 to -1.0 (prune all tokens for non-positive retain ratios) to control the FLOPs of the top-k pruning method.

Table 1: performance and efficiency comparison of LTTP to RoBERTa$_{base}$

| Task | Accuracy | | GFLOPs | | Speedup |
|---|---|---|---|---|---|
| | RoBERTa | LTTP | RoBERTa | LTTP | LTTP |
| MNLI-m | 87.53 | 86.53 | 6.83 | 3.64 | 1.88x |
| MNLI-mm | 87.36 | 86.37 | 7.15 | 3.63 | 1.97x |
| QQP | 90.39 | 89.69 | 5.31 | 2.53 | 2.10x |
| QNLI | 92.86 | 91.98 | 8.94 | 4.77 | 1.87x |
| SST-2 | 94.27 | 93.46 | 4.45 | 2.13 | 2.09x |
| STS-B | 90.89 | 90.03 | 5.53 | 2.84 | 1.95x |
| MRPC | 92.14 | 91.59 | 9.33 | 4.44 | 2.10x |
| RTE | 77.98 | 77.98 | 11.38 | 6.3 | 1.81x |

As shown above in Table 1, the accuracy and processing performance of the LTTP is compared against the RoBERTa$_{base}$ model. Furthermore, during the evaluation, a model is selected for each downstream task to achieve the most efficient computation in terms of smallest GFLOPs while maintaining accuracy within 1% of the RoBERTa$_{base}$ model. Additionally, under the token pruning method disclosed herein, the sequence lengths in each layer can vary across different input sentences. Therefore, the averaged GFLOPs of processing all input sentences in development sets is reported in Table 1. As shown in the table, the token pruning method disclosed herein achieves 1.85× speedup on average with a minimal accuracy degradation of <1 point.

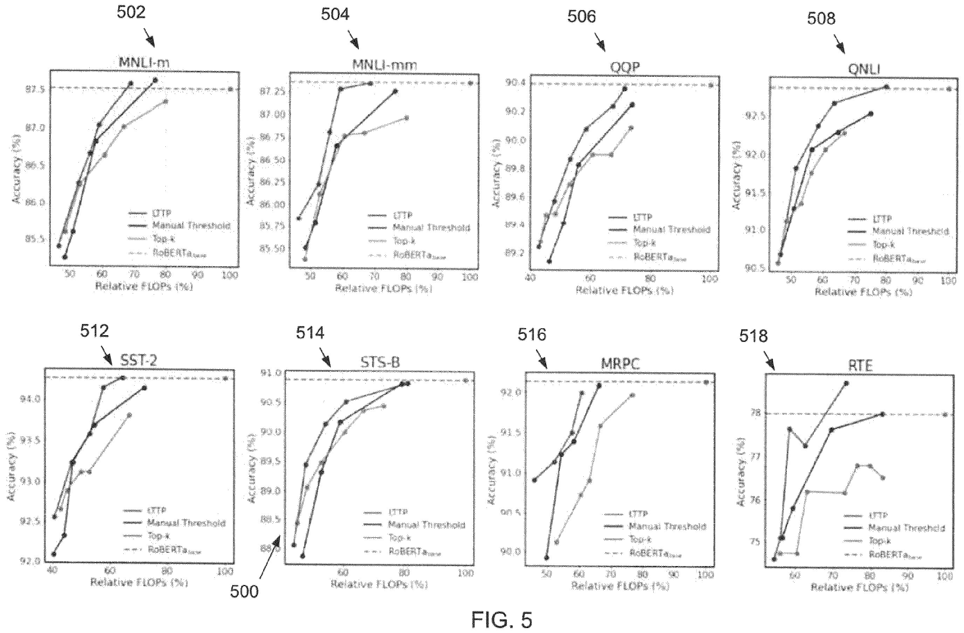

FIG. 5 presents a comparison 500 across each of the 8 metrics for the disclosed methods comparing accuracy versus the relative FLOPs comparing the LTTP methods, a manual threshold of $\theta^{(L)}/\!/L$, and top-k token methods against the RoBERTa$_{base}$ model. The learnable threshold technique provides a clear boost in performance, providing a gap of around 60% of the relative FLOPs to obtain similar if not better accuracy than the RoBERTa$_{base}$ model. Additionally, this performance increase does not include the relative speed up caused by eliminating sequence length padding. As such, the speedup of the disclosed methods may be more than 2 times the RoBERTa$_{base}$ model. Furthermore, the LTTP model provides a noticeable increase in efficiency and accuracy in comparison to both the Top-K and manual threshold methods in FIG. 5

Furthermore, with respect to Top-K token pruning, the time efficiency of a single operation may be compared against the LTTP model over different sequence lengths. In a testing run, a batch size of 32 is used with the results averaged over 100 independent runs. Furthermore, the retain ratio was tested over five different ratios between 10% and 50%. That is, at 10% token retain ratio, 10% of the tokens are selected from the input sentence. A noticeable increase in latency is detected as the relative flops increase due to the computational cost of the top-K increasing according to the function $O(n\log k)$. As a result, Top-K token pruning incurs a huge latency overhead that is $5.6\times$ on average and up to $8.4\times$ slower than using LTTP.

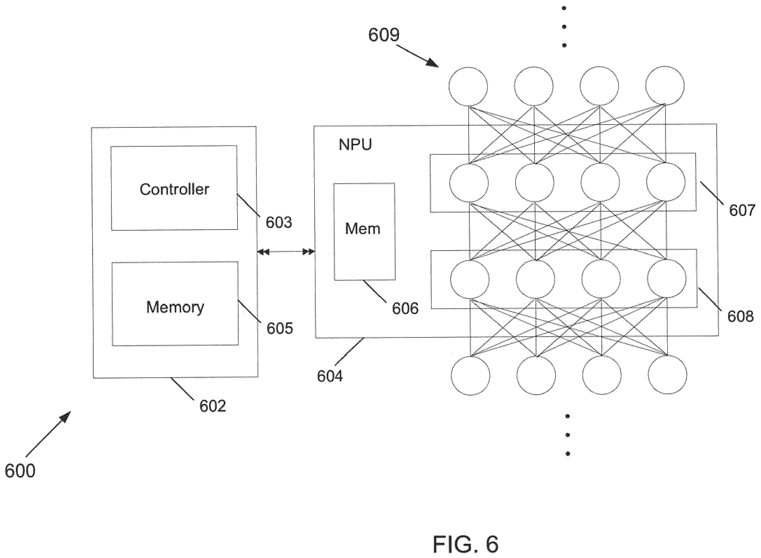

FIG. 6 depicts a system 600 to reduce computation complexity in a neural network according to the subject matter disclosed herein. The system 600 may include a host processing device 602 and a neural processing unit 604. The host processing device 602 may include a processor 603 and a memory 605. In one embodiment, the memory 605 may include DRAM. The neural processing unit 604 may include a memory 606, and multipliers, adder trees and accumulators that are not shown. The various components forming the host processing device 602 and the neural processing unit 604 may be modules that may be embodied as a software package, code and/or instruction set or instructions, as an assembly, hardwired circuitry, programmable circuitry, state machine circuitry, and/or firmware that stores instructions executed by programmable circuitry.

The host processing device 602 may configure the neural processing unit 604 to execute an inference on a neural network architecture 609 having multiple layers. Shown in FIG. 6 are a first layer 607 and a second layer 608 which may be estimated by the host processing device 602. The layers may be encoder layers, decoder layers, attention modules, or a combination thereof forming a transformer. The host processing device 602 transmits data to the neural processing unit 604 in multiple forms, including, for example, a sequence of text or a one-dimensional sequence of integers corresponding to a tokenized text. The neural processing unit 604 receives the data from host processing device 602 and enters it into the neural network architecture 609. In some embodiments, data transmitted from the host processing device 602 may be tokenized within the neural processing unit 604, while in other embodiments the data is pre-processed into a tokenized format. The tokenized data then proceeds through the layers of the neural network architecture 609 including the first layer 607 and the second layer 608. The neural network architecture 609 may operate using any of the methods discussed herein to process the data, including token pruning.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1.   A method to reduce computation in a self-attention model, the method comprising:

training a self-attention model, the self-attention model comprising at least a first sub-model and a second sub-model;
receiving a first input sequence comprising a plurality of tokens into the first sub-model;
scoring each token of the first input sequence for a first token score;
pruning at least one token from first input sequence having a first token score less than a first predetermined threshold score to form a second input sequence;
transmitting the second input sequence to the second sub-model;
scoring each token of the second input sequence in the second sub-model for a second token score; and
pruning at least one token from the second input sequence having a second token score less than a second predetermined threshold score to form a third input sequence;
wherein the second predetermined threshold score differs from the first predetermined threshold score.

2.   The method of claim 1, wherein the second predetermined threshold score is equal to or greater than the first predetermined threshold score.

3.   The method of claim 1 or 2, wherein the difference between the second predetermined threshold score and the first predetermined threshold score is proportional to a predetermined maximum token score.

4.   The method of claim 3, wherein the difference between the second predetermined threshold score and the first predetermined threshold score is inversely proportional to a length of the first input sequence.

5.   The method of claim 3 or 4, wherein the difference between the second predetermined threshold score and the first predetermined threshold score is inversely proportional to a length of the second input sequence.

6.   The method of any one of claims 1 to 5, further comprising:

transmitting the third input sequence to a third sub-model,
scoring each token of the third input sequence in the third sub-model for a third token score; and
pruning at least one token from the third input sequence having a third token score less than a third predetermined threshold score to form a fourth input sequence;
wherein the third predetermined threshold score differs from the second predetermined threshold score.

7.   The method of claim 6, wherein the difference between the third predetermined threshold score and the second predetermined threshold score is equal to the difference between the second predetermined threshold score and the first predetermined threshold score.

8.   A transformer deep-learning model, comprising:

an encoder model having multiple layers, each encoder layer comprising a multi-head attention sublayer that processes an encoder query feature map $Q$, an encoder key feature map $K$, and an encoder value feature map $V$ for an encoder input sequence comprising a plurality of encoder tokens $X$,
at least one encoder layer scoring the plurality of encoder tokens $X$ using a scaled dot-product of the query feature map $Q$ and the encoder key feature map $K$,
at least one encoder layer determining an encoder threshold score $M$, and
at least one encoder layer pruning encoder tokens of the plurality of encoder tokes $X$ with a score less than the encoder threshold score $M$ to form a pruned encoder sequence,
wherein the encoder input sequence for a second encoder layer is the pruned encoder sequence for a first encoder layer, and
wherein the encoder threshold score $M$ increases between the first encoder layer and the second encoder layer.

9. The transformer deep-learning model of claim 8, wherein the encoder threshold score M increases linearly between each encoder layer.

10. The transformer deep-learning model of claim 8 or 9, wherein the encoder threshold score M increases proportional to a predetermined maximum encoder threshold score.

11. The transformer deep-learning model of any one of claims 8 to 10, wherein the encoder threshold score $M$ increases inversely proportional to a length of the encoder input sequence.

12. The transformer deep-learning model of any one of claims 8 to 11, wherein the encoder threshold score $M$ increases proportional to a length of the pruned encoder sequence.

13. The transformer deep-learning model of any one of claims 8 to 12, wherein the encoder threshold score $M$ increases proportional to a layer index of each encoder layer.

14. The transformer deep-learning model of any one of claims 8 to 13, wherein the encoder threshold score $M$ increases linearly between each encoder layer.

FIG. 1C

131

MatMul

SoftMax

Mask (opt.)

Scale

MatMul

Q  K  V

103,113

FIG. 1B

133 Linear

132 Concat

131 Scaled Dot-Product Attention

h

130

Linear  Linear  Linear

V  K  Q

100

101

110

Output Probabilities

120 Softmax

119 Linear

111 Add & Norm

116

114 Feed Forward

115

116

113 Add & Norm

Multi-Head Attention

Nx

115

116 Add & Norm

112 Masked Multi-Head Attention

115

Positional Encoding

118

117 Output Embedding

Outputs (shifted right)

102 Add & Norm

106 Feed Forward

104

105

Nx

106 Add & Norm

103 Multi-Head Attention

105

108

107 Input Embedding

Inputs

Positional Encoding

FIG. 1A

200

| Add regularization terms to the loss function to encourage the threshold to rise to an optimal balance between accuracy and efficiency for pruning tokens | Construct a transformer neural network that contains operations for pruning tokens with low importance scores | Initialize the neural network | Train the neural network with the modified loss function and pruning operations | Export the Trained Neural Network |

201　　　202　　　203　　　204　　　205

FIG. 2

EP 4 095 762 A1

FIG. 3

EP 4 095 762 A1

FIG. 4

FIG. 5

FIG. 6

## EUROPEAN SEARCH REPORT

Europäisches
Patentamt
European
Patent Office
Office européen
des brevets

**Application Number**

EP 22 17 4072

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG HANRUI ET AL: "SpAtten: Efficient Sparse Attention Architecture with Cascade Token and Head Pruning", 2021 IEEE INTERNATIONAL SYMPOSIUM ON HIGH-PERFORMANCE COMPUTER ARCHITECTURE (HPCA), IEEE, 27 February 2021 (2021-02-27), pages 97-110, XP033905611, DOI: 10.1109/HPCA51647.2021.00018 [retrieved on 2021-04-16] * abstract * * page 97, left-hand column, line 1 – page 109, right-hand column, last line * | 1-14 | INV. G06N3/08 G06N3/04 ADD. G06N3/063 |
| A | GYUWAN KIM ET AL: "Length-Adaptive Transformer: Train Once with Length Drop, Use Anytime with Search", ARXIV.ORG, CORNELL UNIVERSITY LIBRARY, 201 OLIN LIBRARY CORNELL UNIVERSITY ITHACA, NY 14853, 14 October 2020 (2020-10-14), XP081786475, * abstract * * page 1, line 1 – page 8, last line * | 1-14 | |
| A | SAURABH GOYAL ET AL: "PoWER-BERT: Accelerating BERT Inference via Progressive Word-vector Elimination", ARXIV.ORG, CORNELL UNIVERSITY LIBRARY, 201 OLIN LIBRARY CORNELL UNIVERSITY ITHACA, NY 14853, 8 September 2020 (2020-09-08), XP081756882, * abstract * * page 1, left-hand column, line 1 – page 9, right-hand column, last line * | 1-14 | |

**TECHNICAL FIELDS SEARCHED (IPC)**

G06N

-/--

The present search report has been drawn up for all claims

| Place of search | Date of completion of the search | Examiner |
|---|---|---|
| The Hague | 12 October 2022 | Totir, Felix |

EPO FORM 1503 03.82 (P04C01)

Europäisches
Patentamt

European
Patent Office

Office européen
des brevets

**EUROPEAN SEARCH REPORT**

Application Number

EP 22 17 4072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ZHANG AIDONG ET AL: "Learned Token Pruning for Transformers", PROCEEDINGS OF THE 28TH ACM SIGKDD CONFERENCE ON KNOWLEDGE DISCOVERY AND DATA MINING, [Online] 23 September 2021 (2021-09-23), pages 1-14, XP055968632, New York, NY, USA DOI: 10.1145/3534678.3539260 ISBN: 978-1-4503-9385-0 Retrieved from the Internet: URL:https://arxiv.org/pdf/2107.00910v2.pdf > [retrieved on 2022-10-11] * abstract * * page 1, left-hand column, line 1 - page 9, left-hand column, line 15 * * page 12, line 1 - page 14, last line * ----- | 1-14 | |
| X,P | DEMING YE ET AL: "TR-BERT: Dynamic Token Reduction for Accelerating BERT Inference", ARXIV.ORG, CORNELL UNIVERSITY LIBRARY, 201 OLIN LIBRARY CORNELL UNIVERSITY ITHACA, NY 14853, 25 May 2021 (2021-05-25), XP081968696, * abstract * * page 1, left-hand column, line 1 - page 9, left-hand column, line 10 * ----- | 1-14 | TECHNICAL FIELDS SEARCHED (IPC) |

The present search report has been drawn up for all claims

| Place of search | Date of completion of the search | Examiner |
|---|---|---|
| The Hague | 12 October 2022 | Totir, Felix |

EPO FORM 1503 03.82 (P04C01)

page 2 of 2